Europäisches Patentamt

European Patent Office

Office européen des brevets

(19)

(11) Veröffentlichungsnummer: **0 337 187 B1**

(12) # EUROPÄISCHE PATENTSCHRIFT

(45) Veröffentlichungstag der Patentschrift: **04.05.94**

(51) Int. Cl.⁵: **C08L 33/08**, C08L 51/04, C08L 57/00

(21) Anmeldenummer: **89105513.9**

(22) Anmeldetag: **03.04.89**

(54) **Polymerisatmischung für flexible Folien.**

(30) Priorität: **09.04.88 DE 3811899**

(43) Veröffentlichungstag der Anmeldung:
**18.10.89 Patentblatt 89/42**

(45) Bekanntmachung des Hinweises auf die
Patenterteilung:
**04.05.94 Patentblatt 94/18**

(84) Benannte Vertragsstaaten:
**CH DE ES FR GB IT LI NL**

(56) Entgegenhaltungen:
**EP-A- 0 074 046**
**EP-A- 0 122 516**

(73) Patentinhaber: **BAYER AG**

**D-51368 Leverkusen(DE)**

(72) Erfinder: **Piejko, Karl-Erwin, Dr.**
**Unterscheider Weg 7a**
**D-5060 Bergisch Gladbach 2(DE)**
Erfinder: **Braese, Hans-Eberhard, Dipl.-Ing.**
**Käthe-Kollwitz-Strasse 3**
**D-5000 Köln 71(DE)**
Erfinder: **Lindner, Christian, Dr.**
**Riehler Strasse 200**
**D-5000 Köln 60(DE)**
Erfinder: **Koch, Otto, Dr.**
**Haferkamp 3**
**D-5000 Köln 80(DE)**

**Beschreibung**

Die Erfindung betrifft Polymerisatmischungen, die sich zur Herstellung von flexiblen Folien mit lederartigem Aussehen eignen und die durch Kalandrieren und Tiefziehen verarbeitet werden können.

Kunststoff-Folien mit lederartigem Aussehen werden beispielsweise zur Innenverkleidung von Kraftfahrzeugen verwendet. Sie werden meist durch Kalandrieren einer Rohfolie und anschließendes Tiefziehen hergestellt. Als Kunststoff verwendet man meist Polyvinylchlorid im Gemisch mit verschiedenen Vinylpolymerisaten und Weichmachern. Diese Folien sind bei hohen Temperaturen nicht vollständig alterungsstabil, enthalten flüchtige, zur Migration neigende Komponenten sowie Halogen. Diese Nachteile sind überwiegend auf den Bestandteil Polyvinylchlorid zurückzuführen. Es besteht daher Bedarf an einem Kunststoffmaterial, das frei ist von Polyvinylchlorid (PVC) und dennoch für die Herstellung lederartiger Folien geeignet.

Es wurde eine Polymerisatmischung aus einem speziellen Pfropfkautschuk auf Acrylat-Basis, einem speziellen Acrylatcopolymer und bestimmten harzartigen Vinylpolymerisaten gefunden, die sich hervorragend zur Herstellung von weichen Folien - auch mit Lederprägung - durch Tiefziehverarbeitung eignet. Die erhaltenen Folien sind alterungsstabil, auch bei hohen Temperaturen. Zur technischen Verarbeitung sind nur wenig Hilfsstoffe (Stabilisatoren, Gleitmittel, Trennmittel etc.) in geringen Mengen erforderlich. Die Folien aus den erfindungsgemäßen Polymerisatmischungen haften besonders gut auf anderen technischen Polymeren, z.B. auf Polyurethan.

Gegenstand der Erfindung sind somit:

Polymerisatmischungen aus

(a) 10-60, insbesondere 20-50 Gew.-Teilen, eines Pfropfpolymerisates von

a1) Gemischen aus 20-40 Gew.-% Acrylnitril und 80-60 Gew.-% Styrol, $\alpha$-Methylstyrol, Alkylmethacrylat oder Mischungen daraus, oder

a2) Methylmethacrylat, gegebenenfalls gemischt mit bis zu 30 Gew.-% Styrol, Acrylnitril und/oder Alkylacrylat

auf

a3) einen teilchenförmigen hochvernetzten Alkylacrylatkautschuk, der bis zu 30 Gew.-% Diene enthalten kann, mit einem mittleren Teilchendurchmesser ($d_{50}$) von 100-800 nm,

wobei die Pfropfpolymerisate (a) Kautschukgehalte von 30-70 Gew.-%, bevorzugt 45-65 Gew.-%, besonders bevorzugt 50-60 Gew.-%, besitzen,

b) 10-50, insbesondere 10-40 Gew.-Teilen eines zumindest teilvernetzten kautschukartigen Copolymerisats aus 5-40 Gew.-% Acrylnitril, Styrol, Alkylmethacrylat oder deren Mischungen und 95-60 Gew.-% Alkylacrylat sowie kleinen Anteilen an Vernetzer-Monomeren mit einem Gelgehalt von 20 bis 99 Gew.-%, einem Quellungsindex größer 10, gemessen in Dimethylformamid bei 23°C und einem mittleren Teilchendurchmesser ($d_{50}$) von 100-600 nm, insbesondere von 100-300 nm,

c) 5-80, bevorzugt 5-60, besonders bevorzugt 10-49 Gew.-Teilen eines unvernetzten Polymerisates von Styrolen, $\alpha$-Methylstyrolen, Acrylnitril, Methacrylnitril, Estern der (Meth)acrylsäure, Vinyl-$C_1$-$C_4$-Carbonsäuren oder Mischungen dieser Monomere mit Staudinger-Indices [$\eta$] (in Toluol bei 23°C gemessen) von 0,3-1,5 dl/g und

d) 0-30, insbesondere 5-25 Gew.-Teilen eines Pfropfpolymerisates von

d1) Methylmethacrylat, und gegebenenfalls bis zu 30 Gew.-% Styrol, Acrylnitril und/oder Alkylacrylat oder

d2) einem Gemisch aus 20-35 Gew.-% Acrylnitril und 80-65 Gew.-% Styrol, $\alpha$-Methylstyrol, Alkylmethacrylat oder Mischungen daraus auf

d3) einen teilchenförmigen, hochvernetzten Alkylacrylatkautschuk, der bis zu 30 Gew.-% Diene enthalten kann, mit einem mittleren Teilchendurchmesser ($d_{50}$) von 100-800 nm

wobei das Pfropfpolymerisat (d) einen Kautschukgehalt von 70-90 Gew.-% besitzt.

Die Komponenten a) und b) werden bevorzugt in Gewichtsverhältnissen von 3:1 bis 1:2, insbesondere 2:1 bis 1:2 verwendet.

Formmassen aus Styrol/Acrylnitril-Copolymerisaten und Pfropfkautschuken sind bekannt.

In der DE-OS 3 129 472 werden z.B. Formmassen aus Styrol/Acrylnitril-Copolymerisaten und Pfropfkautschuken aus Acrylsäureestern als Kautschukgrundlage und Styrol/Acrylnitril-Copolymerisatenals Pfropfhüllen beschrieben. Styrol/Acrylnitril-Copolymerisate im Gemisch mit verschiedenen Pfropfkautschuken auf Polybutadienbasis und auf Acrylat/Butadien-Copolymerisatbasis, bepfropft jeweils mit Styrol und Acrylnitril sind in der DE-OS 3 135 251 beschrieben.

Formmassen aus Styrol/Acrylnitril-Copolymerisaten und speziellen Pfropfkautschuken mit einem mehrschaligen Aufbau beschreibt die DE-OS 3 006 804.

In der DE-OS 2 940 804 sind Mischungen aus Styrol/Acrylnitril-Copolymerisaten und Pfropfkautschuken beschrieben, die zusätzliche Ethylen-Propylen-Co- und -terpolymerisate enthalten.

Styrol-Butadien-Blockcopolymerisate als zusätzliche Komponente beschreibt die DE-OS 3 605 375.

Diese Formmassen werden allgemein zur Herstellung von Formteilen, z.B. Gehäusen von Haushaltsgeräten, verwendet. Sie sind also hart und nicht als Lederersatzfolie, die eine hohe Weichheit aufweisen muß, geeignet.

Versucht man die oben genannten Formmassen durch Erhöhung des Pfropfkautschukanteils weicher zu machen, so erhält man Material mit einem unkomfortablen, gummiartigen Griff mit schlechten Tiefzieheigenschaften, das als Lederersatzfolie ungeeignet ist.

Die Bestandteile a-d der erfindungsgemäßen Polymermischungen sind bekannt.

Pfropfpolymerisate a) im Sinne der Erfindung sind im allgemeinen Emulsionspolymerisate mit Teilchenstruktur. Sie bestehen aus teilchenförmigen Alkylacrylatkautschuken mit einem Gelgehalt von größer 50 Gew.-% und mittleren Teilchendurchmessern ($d_{50}$) von 80 bis 800 nm als Pfropfgrundlage und darauf pfropfpolymerisierten Monomeren wie Alkyl(meth)acrylaten, $\alpha$-Methylstyrolen, Styrolen, Acrylnitril oder Mischungen daraus.

Die Alkylacrylatkautschuke werden bevorzugt durch vernetzende Copolymerisation von $C_2$-$C_8$-Alkylacrylaten und gegebenenfalls bis zu 20 Gew.-% Comonomeren wie Styrol, Methylmethacrylat, Vinylmethylether, Acrylnitril sowie bis zu 4 Gew.-% polyfunktionellen Vinyl- und/oder Allylmonomeren, wie Divinylbenzol, Glykol-bis-acrylat, Bisacrylamid, Phosphorsäuretriallylester, Zitronensäuretriallylester, Triallylcyanurat, Triallylisocyanurat, Allylester von Acrylsäure oder Methacrylsäure, Maleinsäureallylester, insbesondere Triallylcyanurat oder Triallylisocyanurat, hergestellt. Als Pfropfgrundlagen bevorzugte Acrylatkautschuke besitzen eine bimodale Verteilung der mittleren Teilchendurchmesser. Es handelt sich also vorzugsweise um Gemische von zwei teilchenförmigen Kautschuken, wobei der eine einen mittleren Teilchendurchmesser ($d_{50}$) von 150 bis 250 nm und der andere einen mittleren Teilchendurchmesser ($d_{50}$) von 400 bis 600 nm besitzt. Das Gewichtsverhältnis des feinteiligen zum grobteiligen Kautschuk ist 1:2 bis 2:1. In der Verteilungskurve der mittleren Teilchendurchmesser einer Mischung der beiden Kautschuke, die den gleichen oder verschiedenen chemischen Aufbau haben können, befinden sich also zwei Maxima.

Besonders geeignete grobteilige Kautschuke weisen eine Kern-Mantel-Struktur auf (vgl. DE-OS 3 006 804).

Besonders bevorzugte Pfropfgrundlagen im Sinne der Erfindung zur Herstellung der Komponente a) sind somit Gemische von (größeren) Kautschukteilchen mit Kern/Mantel-Struktur und (kleineren) Kautschukteilchen ohne Kern/Mantel-Struktur. Die zur Pfropfpolymerisation eingesetzten Kautschukteilchen sind bevorzugt teilvernetzt und besitzen Gelgehalte von 50-98 Gew.-%. Zur Herstellung von a) werden auf Emulsionen der beschriebenen Acrylatkautschuke in Emulsion Vinylmonomere pfropfpolymerisiert, im allgemeinen Mischungen aus 20-40 Gew.-% Acrylnitril und 80-60 Gew.-% Styrol, $\alpha$-Methylstyrol, Alkylmethacrylat oder Mischungen daraus oder überwiegend Methylmethacrylat, dem bis zu 30 Gew.-% Styrol, Acrylnitril oder Alkylacrylat zugemischt sein kann.

Bevorzugt sind Styrol-Acrylnitril-Mischungen.

Die Pfropfpolymerisate a) enthalten 30-70 Gew.-%, bevorzugt 45-65 Gew.-%, besonders bevorzugt 50-60 Gew.-%, Kautschuk.

Die Vinylmonomere werden bevorzugt mit einer Pfropfausbeute größer 40 Gew.-% aufpolymerisiert, d.h. ein großer Teil der Vinylmonomere ist chemisch an den Kautschuk (über kovalente Bindungen) gebunden. Man erhält solch hohe Pfropfausbeuten, wenn man in an sich bekannter Weise mit Redox-Initiatoren arbeitet, bevorzugt Kombinationen aus Hydroperoxid und Ascorbinsäure, gegebenenfalls unter Zusatz von Schwermetallkationen.

Die Komponente b) im Sinne der Erfindung ist ein wenigstens teilvernetztes kautschukartiges Copolymerisat aus (b1) 5-40 Gew.-% Acrylnitril, Styrol, $C_1$-$C_6$-Alkylmethacrylat (insbesondere $C_1$-$C_3$-Alkylmethacrylat) oder deren Mischungen, insbesondere aber aus Acrylnitril und/oder Methylmethacrylat und (b2) 95-60 Gew.-% Alkylacrylat, insbesondere $C_3$-$C_8$-Alkylacrylat, sowie 0,05-5 Gew.-%, bezogen auf die Summe $b_1$ + $b_2$, einer polyfunktionellen, copolymerisierbaren Polyvinyl- oder Allyl-Verbindung, vorzugsweise Triallylcyanurat, Triallylisocyanurat, Vinylether von Polyolen, Vinyl- oder Allylester polyfunktioneller Carbonsäuren und Bisacrylamide von Diaminen; die Polymerisate b) besitzen Gelgehalte von 20-99 Gew.-%, insbesondere größer 40 Gew.-%, einen Quellungsindex größer 10, gemessen in Dimethylformamid bei 23 °C und mittlere Teilchendurchmesser ($d_{50}$) von 100-600 nm, insbesondere von 100-300 nm.

Die Polymerisate b) können in bekannter Weise durch radikalische, wäßrige Emulsionspolymerisation in Gegenwart anionischer, oberflächenaktiver Stoffe im Temperaturbereich von 40 bis 95 °C, insbesondere 55 bis 80 °C hergestellt werden.

Vinylpolymerisate c) im Sinne der Erfindung sind harzartige Polymerisate bzw. Copolymerisate aus Styrolen, $\alpha$-Methylstyrolen, Acrylnitril, Methacrylnitril, Estern der (Meth)acrylsäure, Vinyl-$C_1$-$C_4$-carbonsäuren bzw. Mischungen aus diesen Monomeren mit Staudinger-Indices $[\eta]$ als Maß für das Molekulargewicht (in Toluol bei 23°C gemessen) zwischen 0,3 und 1,5 dl/g. Bevorzugt sind Copolymere aus Styrol oder $\alpha$-Methylstyrol mit Acrylnitril, die gegebenenfalls bis zu 40 Gew.-% Ester der (Meth)-acrylsäure insbesondere Methylmethacrylat oder Butylacrylat enthalten.

Die Vinylpolymerisate c) werden nach üblichen Verfahren wie radikalische Polymerisation in Masse, Lösung, Suspension oder Emulsion, bevorzugt durch radikalische Emulsionspolymerisation in Wasser, erhalten.

Die in den erfindungsgemäßen Formmassen gegebenenfalls enthaltene Komponente d) stellt wie Komponente a) ein Pfropfpolymerisat dar mit einer Pfropfhülle aus Methylmethacrylat und 0 bis 30 Gew.-% Styrol, Acrylnitril und/oder Alkylacrylat, insbesondere $C_3$-$C_8$-Alkylacrylat, vorzugsweise Butylacrylat, oder mit einer Pfropfhülle aus einer Mischung aus 20-35 Gew.-% Acrylnitril mit 65-80 Gew.-% Styrol, $\alpha$-Methylstyrol, $C_1$-$C_6$-Alkylmethacrylat, insbesondere Styrol und Acrylnitril. Die Pfropfgrundlage besteht aus einem teilchenförmigen, hochvernetzten Alkylacrylatkautschuk mit mittleren Teilchendurchmessern ($d_{50}$) von 100-800 nm, bevorzugt 350-500 nm. Bevorzugt wie auch bei Komponente a), sind hierbei Copolymerisate aus $C_3$-$C_8$-Alkylacrylat mit bis zu 3, bevorzugt bis zu 2 Gew.-% polyfunktionellen Monomeren wie Polyallylverbindungen, vorzugsweise Triallylcyanurat; die Pfropfgrundlagen können genau wie die der Komponente a) eine bimodale Teilchengrößenverteilung besitzen.

Die Pfropfpolymerisate (d) enthalten 70 bis 90 Gew.-% Kautschuk mit 10 bis 30 Gew.-% polymerisiertem Pfropfmonomer.

Die Polymerisate d) können nach üblichen Verfahren durch radikalische Emulsionspfropfpolymerisation von Vinylmonomeren in Gegenwart der Kautschuklatices bei Temperaturen von 60-90°C erzeugt werden, unter Verwendung wasserlöslicher Initiatoren wie Peroxodisulfat oder (wie bei Komponente a)) mit Hilfe spezieller Redoxinitiatoren, bevorzugt Kombinationen aus Hydroperoxid und Ascorbinsäure.

Die erfindungsgemäße Polymermischung läßt sich beispielsweise wie folgt herstellen:

Fallen die Komponenten a-d als wäßrige Dispersionen an, so können die Dispersionen im Verhältnis der gewünschten Feststoffe vermischt und gemeinsam, z.B. zu einem Pulver, aufgearbeitet werden. Das Pulver kann gegebenenfalls zu einem Granulat, unter Zusatz konventioneller Hilfsstoffe, verdichtet werden. Die einzelnen Polymerisate können auch getrennt aufgearbeitet und als Pulver oder Granulat vermischt werden, z.B. in Schnecken, Knetern oder Pulvermischern. Man kann auch zwei oder drei der Polymerisate a)-d) als Dispersionsmischung aufarbeiten und nachträglich, falls erforderlich, weitere Komponenten einfügen. Besonders bevorzugt werden alle Komponenten der Dispersion gemischt und die Mischung aufgearbeitet, insbesondere durch Koagulation mit Elektrolyten oder durch Sprühtrocknung.

Gelgehalte und Quellungsindices wurden, wenn nicht anders angegeben, in Dimethylformamid bei 23°C ermittelt (vgl. M. Hoffmann et al., Polymeranalytik II, Georg Thieme Verlag, Stuttgart, 1977). Die Teilchendurchmesser stellen mittlere Teilchendurchmesser $d_{50}$ dar (siehe dazu "Ultrazentrifugenmessungen", W. Scholtan et al., Kolloidz. u. Z. Polymere 250 (1972) 783-796). Die Pfropfausbeute wurde bestimmt durch Fraktionierung mit nicht mischbaren Flüssigkeiten (vgl. R. Kuhn, Makromol. Chem. 177, 1525 (1976)). Pfropfausbeute ist das Gewichtsverhältnis der pfropfpolymerisierten, harzbildenden Monomere zu der Gesamtmenge der eingesetzten harzbildenden Monomere.

Beispiele

1. Acrylatkautschuk als Pfropfgrundlage

1.1 In einem Reaktor werden vorgelegt:
17 232 Gew.-Teile Wasser und 588 Gew.-Teile eines Polybutadienkautschuklatex mit einem Polymerfeststoffgehalt von 42 Gew.-% und einem mittleren Teilchendurchmesser ($d_{50}$ von 140 nm. Nach Aufheizen auf 63°C gibt man eine Lösung aus 49,2 Gew.-Teilen Kaliumperoxodisulfat und 1152 Gew.-Teilen Wasser hinzu. Danach werden folgende Mischungen gleichzeitig innerhalb von 5 Stunden bei 63°C in den Reaktor eingespeist

Lösung 1: 36 000 Gew.-Teile n-Butylacrylat
     81,6 Gew.-Teile Triallylcyanurat

Lösung 2: 40 800 Gew.-Teile Wasser
     384 Gew.-Teile $C_{14}$-$C_{18}$-Alkylsulfonsäuren-Na-Salz

Danach läßt man 4 Stunden bei 63°C auspolymerisieren. Es wird eine Emulsion mit einem Polymerfeststoffgehalt von 37 Gew.-% erhalten. Der mittlere Latexteilchendurchmesser ($d_{50}$) beträgt 480 nm. Das Polymerisat besitzt einen Gel-Gehalt von 93 Gew.-%.

1.2 In einem Reaktor werden vorgelegt:

10 300 Gew.-Teile Wasser und 5 Gew.-Teile $C_{14}$-$C_{18}$-Alkylsulfonsäure-Na-Salz. Es wird 30 Minuten mit Stickstoff gespült und unter einem leichten Stickstoffstrom auf 70 °C erhitzt. Nach Zugabe einer Lösung von 30 Gew.-Teilen Kaliumperoxodisulfat in 1000 Gew.-Teilen Wasser werden folgende Lösungen innerhalb 5 Stunden gleichmäßig zudosiert:

Lösung 1:  9950 Gew.-Teile n-Butylacrylat

50 Gew.-Teile Trisallylcyanurat

Lösung 2:  200 Gew.-Teile $C_{14}$-$C_{18}$-Alkylsulfonsäuren-Na-Salz

7000 Gew.-Teile Wasser

Danach läßt man 4 Stunden bei 70 °C auspolymerisieren. Es wird eine Emulsion mit einem Feststoffgehalt von 35 % erhalten. Der Mittlere Teilchendurchmesser des Latex ($d_{50}$)-Wert) beträgt 160 nm, der Gelgehalt des Polymerisats 91 %.

## 2. Bestandteile der Polymerisatmischungen

Bestandteil a1:

In einem Reaktor werden 734 Gew.-Teile Wasser, 4784 Gew.-Teile Latex 1.1. vorgelegt. Es wird 30 Minuten mit Stickstoff gespült und auf 70 °C erhitzt. Unter Rühren wird die folgende Lösung 1 zugegeben:

Lösung 1:  190 Gew.-Teile Wasser

6 Gew.-Teile Kaliumperoxodisulfat

3 Gew.-Teile $C_{14}$-$C_{18}$-Alkylsulfonsäuren-Na-Salz

Danach werden die Lösungen 2 und 3 gleichzeitig innerhalb 5 Stunden in den Reaktor bei 70 °C eingespeist.

Lösung 2:  850 Gew.-Teile Styrol

330 Gew.-Teile Acrylnitril

Lösung 3:  1500 Gew.-Teile Wasser

20 Gew.-Teile $C_{14}$-$C_{18}$-Alkylsulfonsäuren-Na-Salz

Man läßt 4 Stunden bei 70 °C auspolymerisieren. Es wird eine Emulsion mit einem Polymerfeststoffgehalt von 35 Gew.-% erhalten. Der Kautschukgehalt des Polymerisates beträgt 60 Gew.-%.

Bestandteil a2:

In einem Reaktor werden 823 Gew.-Teile Wasser, 2392 Gew.-Teile Latex 1.1. und 2528 Gew.-Teile Latex 1.2 vorgelegt. Es wird 30 Minuten mit Stickstoff gespült und auf 61 °C erhitzt. Unter Rühren werden die folgenden 2 Lösungen zugegeben.

Lösung 1:  150 Gew.-Teile Wasser

3,5 Gew.-Teile Cumolhydroperoxid

3 Gew.-Teile $C_{14}$-$C_{18}$-Alkylsulfonsäuren-Na-Salz

Lösung 2:  40 Gew.-Teile Wasser

0,8 Gew.-Teile Ascorbinsäure

2,5 Gew.-Teile $Fe^{II}SO_4$-Lösung (0,1 %ig)

Danach werden die Lösungen 3 + 4 gleichzeitig innerhalb 5 Stunden in den Reaktor bei 61 °C eingespeist.

Lösung 3:  850 Gew.-Teile Styrol

330 Gew.-Teile Acrylnitril

Lösung 4:  1500 Gew.-Teile Wasser

20 Gew.-Teile $C_{14}$-$C_{18}$-Alkylsulfonsäuren-Na-Salz

Man läßt 4 Stunden bei 61 °C auspolymerisieren. Es wird eine Emulsion mit einem Polymerfeststoffgehalt von 34 Gew.-% erhalten. Der Kautschukgehalt des Polymerisats beträgt 60 Gew.-%, die Pfropfausbeute beträgt 55 %.

Bestandteil b:

In einem Reaktor werden unter Rühren eine Lösung von 2,5 Gew.-Teilen Na-Salz von $C_{14}$-$C_{18}$-Alkylsulfonsäuren und 750 Gew.-Teilen Wasser vorgelegt. Nach Aufheizen auf 70 °C gibt man 70 Gew.-Teile der Monomerlösung A) hinzu und initiiert die Polymerisation durch Zugabe einer Lösung von 3,5 Gew.-Teilen Kaliumperoxodisulfat in 50 Gew.-Teilen Wasser. Bei 70 °C dosiert man den Rest der Lösung A) sowie die Lösung B) gleichmäßig innerhalb von 6 Stunden in den Reaktor ein und polymerisiert innerhalb von 4 Stunden aus. Es wird ein Latex mit einem Polymerfeststoffgehalt von 38 Gew.-%, mit einem mittleren Teilchendurchmesser ($d_{50}$) von 180 nm und einem Gelgehalt (in Dimethylformamid bei 23°C) von 98 Gew.-% erhalten.

| | | |
|---|---|---|
| Lösung A: | 1105 Gew.-Teile n-Butylacrylat | |
| | 7 Gew.-Teile Triallylcyanurat | |
| | 474 Gew.-Teile Acrylnitril | |
| Lösung B: | 30 Gew.-Teile Na-Salz von $C_{14}$-$C_{18}$-Alkylsulfonsäuren | |
| | 1790 Gew.-Teile Wasser | |

Bestandteil c:

In einem Reaktor werden eine Lösung von 6 Gew.-Teilen disproportionierte Abietinsäure, 4 Gew.-Teile 1-normale Natronlauge in 3080 Gew.-Teilen Wasser vorgelegt, mit Stickstoff gespült und auf 70°C geheizt. Unter Rühren setzt man 200 Gew.-Teile der Lösung A zu und initiiert die Polymerisation durch Zugabe einer Lösung aus 8 Gew.-Teilen Kaliumperoxodisufat in 200 Gew.-Teilen Wasser. Bei 70° dosiert man den Rest der Lösung A und Lösung B gleichmäßig innerhalb 5 Stunden in den Reaktor ein. Man läßt 4 Stunden bei 70°C auspolymerisieren. Es wird eine Emulsion mit einem Polymerfeststoffgehalt von 33 Gew.-% erhalten. Das isolierte Polymerisat besitzt einen Staudinger-Index $[\eta]$ von 0,7 dl/g (in Dimethylformamid bei 23°C).

| | | |
|---|---|---|
| Lösung A: | 1944 Gew.-Teile Styrol | |
| | 756 Gew.-Teile Acrylnitril | |
| | 2,6 Gew.-Teile tert.-Dodecylmercaptan | |
| Lösung B: | 54 Gew.-Teile disproportionierte Abietinsäure | |
| | 40 Gew.-Teile 1-normale Natronlauge | |
| | 2050 Gew.-Teile Wasser | |

Bestandteil d:

In einem Reaktor werden 75 Gew.-Teile Wasser, 5968 Gew.-Teile Latex 1.1 vorgelegt. Es wird 30 Minuten mit Stickstoff gespült und auf 70°C erhitzt. Unter Rühren wird die folgende Lösung zugegeben:

| | | |
|---|---|---|
| Lösung 1: | 131 Gew.-Teile Wasser | |
| | 3,3 Gew.-Teile Kaliumperoxodisulfat | |

Danach werden die Lösungen 2 und 3 gleichzeitig innerhalb 4 Stunden in den Reaktor bei 70°C eingespeist.

| | | |
|---|---|---|
| Lösung 2: | 552 Gew.-Teile Methylmethacrylat | |
| Lösung 3: | 772 Gew.-Teile Wasser | |
| | 8,2 Gew.-Teile $C_{14}$-$C_{18}$-Alkylsulfonsäure-Na-Salz | |

Man läßt 4 Stunden bei 70°C auspolymerisieren. Es wird eine Emulsion mit einem Polymerfeststoffgehalt von 37 Gew.-% erhalten. Der Kautschukgehalt des Polymerisates beträgt 80 Gew.-%.

3. Herstellung und Eigenschaften der Polymerisatmischung

Zur Herstellung der Polymerisatmischungen werden die Latices der Komponenten a, b, d mit dem Latex c so vermischt, daß die Feststoffanteile die in Tabelle 1 aufgeführten Zusammensetzungen der Polymerisatmischungen ergeben. Die Latexmischungen werden mit 1 Gew.-% (bezogen auf Feststoff) eines phenolischen Stabilisators versetzt und mit wäßriger Magnesiumsulfatlösung koaguliert. Die primär erhaltenen Pulver werden abfiltriert, gewaschen und bei 60°C getrocknet. Die erhaltenen Pulver werden nach Zugabe von 0,5 Gew.-% Esterwachs auf einem Mischwalzwerk 10 Minuten bei 200°C homogenisiert und bei 190°C zu Prüfkörpern verpreßt. Die Eigenschaften der Prüfkörper sind in Tabelle 2 aufgelistet.

Prüfmethoden:

| | |
|---|---|
| Zugfestigkeit | DIN 53 455 |
| Dehnung | DIN 53 455 |
| Weiterreißfestigkeit | DIN 53 515 |
| Shore-Härte | DIN 53 505/Typ D |
| Vicat-Temperatur | Verfahren A |
| Kältefestigkeit | DIN 53 372 |

Tiefziehversuch:

Eine auf der Walze hergestellte Folie (Länge 300 mm, Breite 300 mm, Dicke 1 mm) wird in eine Tiefziehform eingespannt und auf 160°C bzw. 175°C Oberflächentemperatur erhitzt (Bestimmung der Oberflächentemperatur mittels Schmelzsalz). Ein Kegelstumpf gemäß Figur 1 wird unter Anlegen eines Vakuums 21 cm tief in die Folie hineingedrückt.

Beurteilung:

+ : Es wird bei 160°C und bei 175°C Oberflächentemperatur ein dem Kegelstumpf entsprechender Hohlkörper gleichmäßiger Wandstärke erhalten.

- : Die Folie reißt.

Tabelle 1

| Zusammensetzung der Polymermischungen (in Gew.-Teilen) | | | | | |
|---|---|---|---|---|---|
| Versuch Nr. | Bestandteile | | | | |
| | a1) | a2) | b) | c) | d) |
| 3.1. | 40 | - | 40 | 20 | - |
| 3.2. | 40 | - | 20 | 20 | 20 |
| 3.3. | 36 | - | 25 | 19 | 20 |
| 3.4. | 50 | - | 40 | 10 | - |
| 3.5. | - | 40 | 40 | 20 | - |
| 3.6.* (Vergleich) | - | 60 | 40 | - | - |

4. Vergleich der Alterungsstabilität der erfindungsgemäßen Polymerisatmischungen 3.1-3.5 mit bekannten Polyvinylchlorid-haltigen Tiefziehformmassen

Folien aus den Materialien werden bei 130°C und 150°C 21 Tage gelagert. Während sich die Polyvinylchlorid-haltigen Folien dunkelbraun bis schwarz verfärben, verändert sich die Farbe der erfindungsgemäßen Folien praktisch nicht.

Tabelle 2: Eigenschaften der Mischungen aus Tabelle 1 (* = Vergleichsmischung)

| Versuch Nr. | Zugfestig-keit [MPa] | Dehnung [%] | Weiter-reiß-festig-keit [N/mm] | Shore-Härte [15"] | Vicat A [°C] | Kältefestig-keit [°C] | Tiefzieh-verhalten |
|---|---|---|---|---|---|---|---|
| 3.1 | 20,6 | 204 | 53 | 39 | 84 | -10 | + |
| 3.2 | 17,9 | 188 | 59 | 43 | 97 | -24 | + |
| 3.3 | 18,6 | 192 | 56 | 42 | 93 | -27 | + |
| 3.4 | 18,6 | 198 | 43 | 38 | 81 | -18 | + |
| 3.5 | 17,2 | 223 | 56 | 45 | 96 | - 9 | + |
| 3.6* | 18,6 | 212 | 57 | 38 | 86 | -38 | - |

Die Prüfdaten aus Tabelle 2 und die Untersuchung der Alterungsstabilität (Hitzealterung) zeigen ein ausgewogenes Eigenschaftbild der erfindungsgemäßen Formmassen, das dem üblicher PVC-haltiger Folien überlegen ist. Aus den Mischungen lassen sich durch Tiefziehen geprägte Folien mit einem lederartigen Aussehen und Griff herstellen. Die Vergleichsformmasse 3.6* läßt sich dagegen nicht durch einen Tiefzieh-prozeß verarbeiten.

8

**Patentansprüche**

1. Polymerisatmischungen aus
   a) 10-60 Gew.-Teilen eines Pfropfpolymerisates von
      (a1) Gemischen aus 20-40 Gew.-% Acrylnitril und 80-60 Gew.-% Styrol, $\alpha$-Methylstyrol, Alkylmethacrylat oder Mischungen daraus,
      oder
      (a2) Methylmethacrylat, gegebenenfalls gemischt mit bis zu 30 Gew.-% Styrol, Acrylnitril und/oder Alkylacrylat
      auf
      (a3) einen teilchenförmigen hochvernetzten Alkylacrylatkautschuk, der bis zu 30 Gew.-% Diene enthalten kann, mit einem mittleren Teilchendurchmesser ($d_{50}$) von 100-800 nm,
      wobei das Pfropfpolymerisat a) einen Kautschukgehalt von 30-70 Gew.-% besitzt,
   b) 10-50 Gew.-Teilen eines zumindest teilvernetzten kautschukartigen Copolymerisates aus 5-40 Gew.-% Acrylnitril, Styrol, Alkylmethacrylat oder deren Mischungen und 95-60 Gew.-% Alkylacrylat sowie kleinen Anteilen an Vernetzer-Monmeren mit einem Gelgehalt von 20 bis 99 Gew.-%, einem Quellungsindex größer 10, gemessen in Dimethylformamid bei 23°C und einem mittleren Teilchendurchmesser ($d_{50}$) von 100-600 nm,
   c) 5-80 Gew.-Teilen eines unvernetzten Polymerisates von Styrolen, $\alpha$-Methylstyrolen, Acrylnitril, Methacrylnitril, Ester der (Meth)-acrylsäure, Vinyl-$C_1$-$C_4$-Carbonsäuren oder Mischungen dieser Monomere mit Staudinger-Indices [$\eta$] (in Toluol bei 23°C gemessen) von 0,3-1,5 dl/g und
   d) 0-30 Gew.-Teilen eines Pfropfpolymerisates von
      d1) Methylmethacrylat und gegebenenfalls bis zu 30 Gew.-% Styrol, Acrylnitril und/oder Alkylacrylat oder
      d2) einem Gemisch aus 20-35 Gew.-% Acrylnitril und 80-65 Gew.-% Styrol, $\alpha$-Methylstyrol, Alkylmethacrylat oder Mischungen daraus auf
      d3) einen teilchenförmigen, hochvernetzten Alkylacrylatkautschuk, der bis zu 30 Gew.-% Diene enthalten kann mit einem mittleren Teilchendurchmesser ($d_{50}$) von 100-800 nm,
      wobei das Pfropfpolymerisat (d) einen Gesamtkautschukgehalt von 70-90 Gew.-% besitzt.

2. Polymerisatmischungen nach Anspruch 1, in denen das Gewichtsverhältnis der Komponenten (a) und (b) 3:1 bis 1:2 ist.

3. Verwendung der Polymerisatmischungen gemäß Anspruch 1 zur Herstellung lederartiger, flexibler Folien.

**Claims**

1. A polymer blend of
   a) 10-60 parts by weight of a graft polymerisate of
      (a1) mixtures of 20-40% by weight of acrylonitrile and 80-60% by weight of styrene, $\alpha$-methylstyrene, alkyl methacrylate or mixtures thereof, or
      (a2) methyl methacrylate, optionally mixed with up to 30% by weight of styrene, acrylonitrile and/or alkyl acrylate
      on
      (a3) a particulate, highly cross-linked alkyl acrylate rubber, which can contain up to 30% by weight of dienes, having an average particle diameter ($d_{50}$) of 100-800 nm,
      wherein the graft polymerisate a) has a rubber content of 30-70% by weight,
   b) 10-50 parts by weight of an at least partly cross-linked rubber-like copolymerisate of 5-40% by weight of acrylonitrile, styrene, alkyl methacrylate or mixtures thereof, and 95-60% by weight of alkyl acrylate as well as small portions of cross-linking monomers with a gel content of 20-99% by weight, a swelling index, measured in dimethylformamide at 23°C, greater than 10 and an average particle diameter ($d_{50}$) of 100-600 nm,
   c) 5-80 parts by weight of a polymerisate that is not cross-linked, composed of styrenes, $\alpha$-methylstyrenes, acrylonitrile, methacrylonitrile, esters of (meth)acrylic acid, vinyl-$C_1$-$C_4$-carboxylic acids or mixtures of these monomers with Staudinger indices [$\eta$] (measured at 23°C in toluene) of 0.3-1.5 dl/g and
   d) 0-30 parts by weight of a graft polymerisate of

d1) methyl methacrylate and optionally up to 30% by weight of styrene, acrylonitrile and/or alkyl acrylate or

d2) a mixture of 20-35% by weight of acrylonitrile and 80-65% by weight of styrene, α-methylstyrene, alkyl methacrylate or mixtures thereof on

d3) a particulate, highly cross-linked alkyl acrylate rubber, which can contain up to 30% by weight of dienes, having an average particle diameter ($d_{50}$) of 100-800 nm,

wherein the graft polymerisate d) has a total rubber content of 70-90% by weight.

2. Polymer blends according to claim 1, wherein the proportion by weight of the components (a) and (b) is 3:1 to 1:2.

3. Use of the polymer blends according to claim 1 for producing leathery, flexible sheets.

**Revendications**

1. Mélanges de polymères consistant en

a) 10 à 60 parties en poids d'un polymère greffé de

a1) des mélanges de 20 à 40 % en poids d'acrylonitrile et 80 à 60 % en poids de styrène, d'α-méthylstyrène, d'un méthacrylate d'alkyle ou leurs mélanges, ou bien

a2) du méthacrylate de méthyle, éventuellement en mélange avec une proportion allant jusqu'à 30 % en poids de styrène, d'acrylonitrile et/ou d'un acrylate d'alkyle sur

a3) un caoutchouc d'acrylate d'alkyle fortement réticulé, en particules, qui peut contenir jusqu'à 30 % en poids de diènes, à un diamètre de particule moyen $d_{50}$ de 100 à 800 nm,

le polymère greffé a) ayant une teneur en caoutchouc de 30 à 70 % en poids,

b) 10 à 50 parties en poids d'un copolymère du type caoutchouc, réticulé en partie au moins, de 5 à 40 parties d'acrylonitrile, de styrène, d'un méthacrylate d'alkyle ou leurs mélanges et 95 à 60 % en poids d'un acrylate d'alkyle ainsi que des petites proportions de monomères réticulants, à une teneur en gel de 20 à 99 % en poids, un indice de gonflement supérieur à 10, la mesure étant faite dans le diméthylformamide à 23 ° C, et un diamètre de particule moyen $d_{50}$ de 100 à 600 nm,

c) 5 à 80 parties en poids d'un polymère non réticulé de styrènes, d'α-méthylstyrènes, d'acrylonitrile, de méthacrylonitrile, d'esters (méth)acryliques, d'esters vinyliques d'acides carboxyliques en $C_1$-$C_4$ ou de mélanges de ces monomères, avec un indice de Staudinger [$\eta$] (mesure dans le toluène à 23 ° C) de 0,3 à 1,5 dl/g et

d) 0 à 30 parties en poids d'un polymère greffé de

d1) du méthacrylate de méthyle et le cas échéant jusqu'à 30 % en poids de styrène, d'acrylonitrile et/ou d'un acrylate d'alkyle, ou bien

d2) un mélange de 20 à 35 % en poids d'acrylonitrile et 80 à 65 % en poids de styrène, d'α-méthylstyrène, d'un métacrylate d'alkyle ou leurs mélanges, sur

d3) un caoutchouc d'acrylate fortement réticulé, en particules, qui peut contenir jusqu'à 30 % en poids de diènes, à un diamètre de particule moyen $d_{50}$ de 100 à 800 nm,

le polymère greffé d) ayant une teneur totale en caoutchouc de 70 à 90 % en poids.

2. Mélanges de polymères selon la revendication 1, dans lesquels les proportions relatives en poids entre les composants (a) et (b) vont de 3:1 à 1:2.

3. Utilisation des mélanges de polymères selon la revendication 1 pour la fabrication de feuilles souples analogues à du cuir.